(19) Europäisches Patentamt
European Patent Office
Office européen des brevets

(11) **EP 2 763 096 A1**

(12) **EUROPEAN PATENT APPLICATION**
published in accordance with Art. 153(4) EPC

(43) Date of publication:
06.08.2014 Bulletin 2014/32

(51) Int Cl.:
*G06Q 30/02* (2012.01)     *G06Q 10/04* (2012.01)
*G06Q 50/10* (2012.01)

(21) Application number: 12836050.0

(22) Date of filing: 24.09.2012

(86) International application number:
PCT/JP2012/074399

(87) International publication number:
WO 2013/047440 (04.04.2013 Gazette 2013/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 26.09.2011   JP 2011209653

(71) Applicant: Mitsubishi Heavy Industries, Ltd.
Tokyo 108-8215 (JP)

(72) Inventors:
• MITSUHASHI, Masato
Tokyo 108-8215 (JP)

• MATSUO, Atsushi
Tokyo 108-8215 (JP)
• ARAI, Takashi
Tokyo 108-8215 (JP)

(74) Representative: Hess, Peter K. G.
Bardehle Pagenberg Partnerschaft mbB
Patentanwälte, Rechtsanwälte
Prinzregentenplatz 7
81675 München (DE)

(54) **DEMAND FORECASTING DEVICE, DEMAND FORECASTING METHOD, AND DEMAND FORECASTING PROGRAM**

(57)     A demand prediction apparatus (10) includes: an activity number acquisition unit (161a) that acquires the number of activities of a target that a demand is predicted; a replacement factor calculation unit (161b) that calculates a replacement factor of the target that a demand is predicted based on a first curve that expresses a change of a probability of occurrence of a failure in a time series and a second curve that expresses a change of a probability of occurrence of a failure in a time series; and a demand prediction unit (161c) that calculates a demand for the target that a demand is predicted based on the number of activities acquired at the activity number acquisition unit (161a) and the replacement factor calculated at the replacement factor calculation unit (161b).

FIG.1

**Description**

Field

The present invention relates to a demand prediction apparatus, a demand prediction method, and a demand prediction program. Background

Such a technique is known in which a demand for a part or a consumable item is predicted based on the sales performance of a product (for example, Patent Literature 1).

Citation List

Patent Literature

Patent Literature 1: Japanese Laid-open Patent Publication No. 2003-233709

Summary

Technical Problem

In the technique above that predicts a demand for a part or a consumable item based on the sales performance, it is sometimes difficult to obtain an accurate predicted result. It is an object of the present invention is to provide a demand prediction apparatus, a demand prediction method, and a demand prediction program that can accurately predict a demand.

Solution to Problem

According to an aspect of the present invention, a demand prediction apparatus includes: an activity number acquisition unit being configured to acquire a number of activities of a target for which a demand is predicted; a replacement factor calculation unit being configured to calculate a replacement factor of the target for which a demand is predicted based on a first curve that expresses a change of a probability of occurrence of a failure in a time series and a second curve that expresses a change of a probability of occurrence of a failure in a time series; and a demand prediction unit being configured to predict a demand for the target based on a number of activities acquired at the activity number acquisition unit and the replacement factor calculated at the replacement factor calculation unit.

Advantageously, in the demand prediction apparatus, the first curve is a curve based on a first Weibull distribution, and the second curve is a curve based on a second Weibull distribution.

Advantageously, in the demand prediction apparatus, the first Weibull distribution is different in at least a location parameter from the second Weibull distribution.

Advantageously, the demand prediction apparatus further includes a storage unit configured to store a plurality of parameters to determine the first curve and the second curve. The replacement factor calculation unit determines the first curve and the second curve based on a parameter selected from the parameters stored on the storage unit.

Advantageously, in the demand prediction apparatus, the storage unit stores the parameters for individual specifications of the target.

Advantageously, in the demand prediction apparatus, the storage unit stores the parameters for individual regions in which a demand is predicted.

Advantageously, in the demand prediction apparatus, the replacement factor calculation unit varies a height of the first curve and a height of the second curve based on a temporal change in a ratio at which the target is used in a market.

According to another aspect of the present invention, a demand prediction method executed by a demand prediction apparatus, the method includes the steps of: acquiring a number of activities of a target that a demand is predicted; calculating a replacement factor of the target that a demand is predicted based on a first curve that expresses a change of a probability of occurrence of a failure in a time series and a second curve that expresses a change of a probability of occurrence of a failure in a time series; and calculating a demand for the target that a demand is predicted based on the number of activities and the replacement factor.

According to still another aspect of the present invention, a demand prediction program that causes a demand prediction apparatus to perform the steps of: acquiring a number of activities of a target that a demand is predicted; calculating a replacement factor of the target that a demand is predicted based on a first curve that expresses a change of a probability of occurrence of a failure in a time series and a second curve that expresses a change of a probability of occurrence of a failure in a time series; and calculating a demand for the target that a demand is predicted based on the number of activities and the replacement factor. Advantageous Effects of Invention

The demand prediction apparatus, the demand prediction method, and the demand prediction program according to the present invention exert the effect that can accurately predict a demand.

Brief Description of Drawings

FIG. 1 is a block diagram of the configuration of a demand prediction apparatus according to an embodiment.
FIG. 2 is a diagram of an exemplary curve expressing changes of a replacement factor in a time series.
FIG. 3 is a diagram of an exemplary model of changes of a replacement factor in a time series.
FIG. 4 is a diagram of exemplary shipment number information.
FIG. 5 is a diagram of exemplary remaining rate information.
FIG. 6 is a diagram of exemplary replacement factor calculation parameters.
FIG. 7 is a diagram of exemplary demand information.
FIG. 8 is a flowchart of the process procedures of a demand prediction process.
FIG. 9 is a diagram of an exemplary calculated result of the demand prediction process.
FIG. 10 is a diagram of an example that demands predicted using a demand prediction method according to the embodiment are compared with actual values.
FIG. 11 is a diagram of another example of replacement factor calculation parameters.
FIG. 12 is a diagram of an exemplary parameter select screen.

Description of Embodiments

In the following, an embodiment of a demand prediction apparatus, a demand prediction method, and a demand prediction program according to the present invention will be described in detail with reference to the drawings. It is noted that the present invention is not limited to this embodiment. Moreover, components according to the embodiment include components that a person skilled in the art can easily conceive, components that are substantially the same, and components that are so-called equivalents.

Embodiment

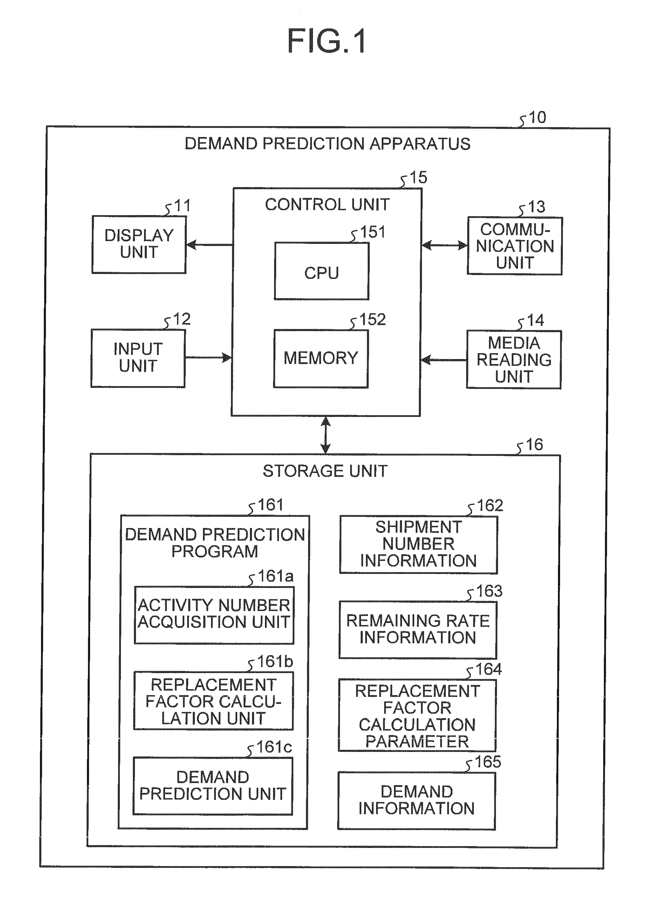

First, the configuration of a demand prediction apparatus according to an embodiment will be described. FIG. 1 is a block diagram of the configuration of a demand prediction apparatus according to an embodiment. In the following, an example will be described in which a demand prediction apparatus 10 is used for predicting a demand for a turbocharger in the aftermarket. The aftermarket means markets of dealers such as automobile parts shop dealers and automobile repair shop dealers other than authorized dealers.

As illustrated in FIG. 1, the demand prediction apparatus 10 includes a display unit 11, an input unit 12, a communication unit 13, a media reading unit 14, a control unit 15, and a storage unit 16.

The display unit 11 includes a display device such as a liquid crystal panel and an organic EL (Organic Electro-Luminescence) panel, and displays various items of information such as characters and graphic forms based on control signals sent from the control unit 15. The input unit 12 includes an input device such as a keyboard, and outputs signals corresponding to manipulations to the control unit 15 when a user makes manipulations to the input device. The communication unit 13 controls sending information to and receiving information from other devices based on a predetermined communication protocol. The media reading unit 14 reads programs and data out of a portable, non-transitory storage medium such as an optical disk, a magneto-optical disk, and a memory card.

The control unit 15 includes a CPU (Central Processing Unit) 151 that is an arithmetic and logic unit and a memory 152 that is a storage device, and implements various functions by executing programs using these hardware sources. More specifically, the control unit 15 reads a program stored on the storage unit 16, expands the program on the memory 152, and causes the CPU 151 to execute instructions included in the program expanded on the memory 152. The control unit 15 then reads data out of and writes data on the memory 152 and the storage unit 16 according to the executed result of instructions made by the CPU 151, or controls the operations of the communication unit 13, for example.

The storage unit 16 is formed of a magnetic storage device or a non-volatile storage device such as a semiconductor memory device, and stores various programs and various items of data. Programs stored on the storage unit 16 include a demand prediction program 161. Moreover, data stored on the storage unit 16 includes shipment number information 162, remaining rate information 163, a replacement factor calculation parameter 164, and demand information 165.

It is noted that such a configuration may be possible in which all or a part of programs and items of data supposed to be stored on the storage unit 16 in FIG. 1 are stored on a non-transitory storage medium readable by the media reading unit 14. Furthermore, such a configuration may be possible in which all or a part of programs and items of data supposed to be stored on the storage unit 16 in FIG. 1 are acquired from different devices via the communication of the communication unit 13.

The demand prediction program 161 provides a function that annually predicts demands for parts in the aftermarket. The demand prediction program 161 includes an activity number acquisition unit 161a, a replacement factor calculation unit 161b, and a demand prediction unit 161c.

The activity number acquisition unit 161a annually acquires the number of activities of a part after starting the shipment of a product including the part for which a demand is predicted. The number of activities means a value that the number of products which are no longer used because of some reasons such as a failure and a replacement purchase is subtracted from the number of parts in activity, that is, the total number of products including the parts and shipped to the market. The activity number acquisition unit 161a calculates the number of activities based on the shipment number information 162 and the remaining rate information 163.

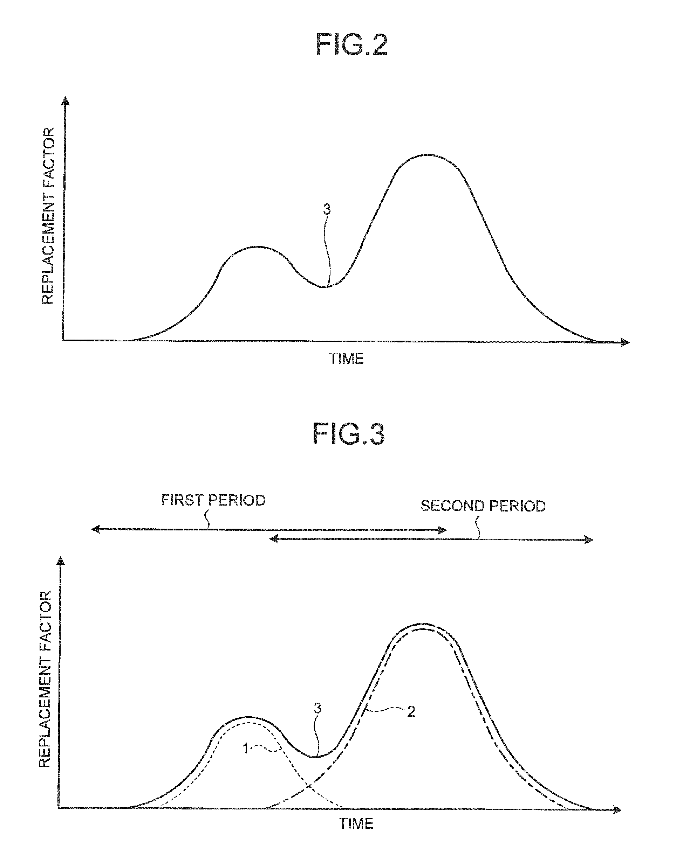

The replacement factor calculation unit 161b annually calculates the replacement factor of parts in the aftermarket. The replacement factor referred here means the ratio of the number of parts replaced in the aftermarket to the number of activities. As illustrated in FIG. 2, a curve 3 that expresses changes of a replacement factor of the turbocharger in a time series generally takes a shape like a mountain having two peaks. In order to calculate the replacement factor changing in this manner, as illustrated in FIG. 3, the replacement factor calculation unit 161b processes the curve 3 as a curve that a curve 1 based on a Weibull distribution in a first period is overlapped with a curve 2 based on a Weibull distribution in a second period. The second period is set in such a way that the second period is placed after the first period and partially overlapped with the first period.

More specifically, the replacement factor calculation unit 161b calculates the replacement factor after time t elapses from the start of shipment using Equation (1) below.

[Equation 1]

$$
\begin{aligned}
\text{replacement factor} = \\
\text{failure rate} \times \text{market rate (first period)} \times \\
\frac{m}{\eta}\left(\frac{t-\gamma 1}{\eta}\right)^{m-1}\exp\left\{-\left(\frac{t-\gamma 1}{\eta}\right)^{m}\right\} + \\
\text{failure rate} \times \text{market rate (second period)} \times \\
\frac{m}{\eta}\left(\frac{t-\gamma 2}{\eta}\right)^{m-1}\exp\left\{-\left(\frac{t-\gamma 2}{\eta}\right)^{m}\right\}
\end{aligned}
\tag{1}
$$

In Equation (1), the failure rate is a value expressing the tendency that a part fails for which a demand is predicted. The failure rate is specified for individual parts for which a demand is predicted. The market ratio is a value expressing the ratio that a part for which a demand is predicted is purchased in the aftermarket, not at authorized dealers. The market ratio is individually set to the first period and the second period.

m is a shape parameter of the Weibull distribution. $\eta$ is a scale parameter of the Weibull distribution. $\gamma 1$ is a location parameter of the Weibull distribution in the first period. $\gamma 2$ is a location parameter of the Weibull distribution in the second period. As described above, among the parameters of the Weibull distribution, at least the location parameter is set to values different between the first period and the second period. Different values are set to the location parameter between the first period and the second period, and the curve 1 and the curve 2 illustrated in FIG. 3 reach peaks at different points in time. Such a configuration may be possible in which common values are set to the other parameters of the Weibull distribution between the first period and the second period or different values are set to the other parameters.

It is noted that in the embodiment, the Weibull distribution is adopted as a model that expresses the probability of occurrence of a failure. However, different models may be adopted as the model that expresses the probability of occurrence of a failure. For the model that expresses the probability of occurrence of a failure, for example, models such as a normal distribution, a Poisson distribution, a binomial distribution, and an exponential distribution can be adopted.

The demand prediction unit 161c predicts (calculates) the number of demands for a part in the aftermarket based on the number of activities acquired at the activity number acquisition unit 161a and the replacement factor calculated at the replacement factor calculation unit 161b.

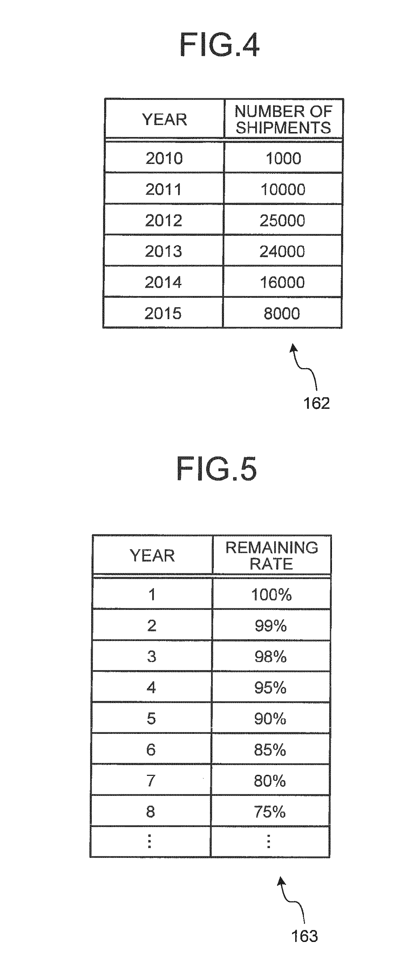

The shipment number information 162 holds information about the number of shipments of a product including a part for which a demand is predicted. FIG. 4 is a diagram of exemplary shipment number information 162. As illustrated in FIG. 4, the shipment number information 162 annually stores the number of shipments of a product including a part for which a demand is predicted. Such a configuration may be possible in which the shipment number information 162 stores actual values as the numbers of shipments corresponding to years in the past and stores prediction values as the numbers of shipments corresponding to the present year and later.

The remaining rate information 163 holds information about the remaining rate of a product including a part for which a demand is predicted. The remaining rate means the ratio of a product in activity occupied in shipped products. FIG. 5 is a diagram of exemplary remaining rate information 163. As illustrated in FIG. 5, the remaining rate information 163 stores the remaining rate of a product including a part for which a demand is predicted for individual elapsed years from the start of shipment of the product.

The remaining rate can be calculated using techniques described in the following document, for example. Masayuki Sano, *"A Convenient Estimation Methodology for Survival Rate of Automobiles",* Doshisha University Institute for Technology, Enterprise And Competitiveness Working Paper 08-06.

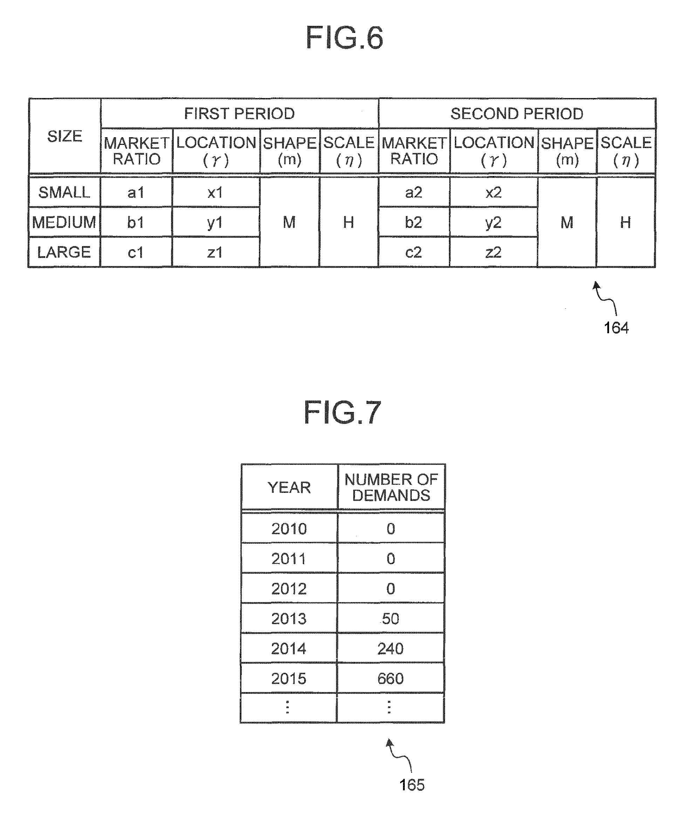

The replacement factor calculation parameter 164 holds parameters to calculate the replacement factor using Equation (1) above. FIG. 6 is a diagram of an exemplary replacement factor calculation parameter 164. As illustrated in FIG. 6, the replacement factor calculation parameter 164 is configured in which different values are provided for the market ratio, the location parameter, the shape parameter, and the scale parameter between the first period and the second period. Moreover, as illustrated in FIG. 6, the replacement factor calculation parameter 164 is configured so as to have different values for the individual specifications of a part. In the example illustrated in FIG. 6, the replacement factor calculation parameter 164 is configured to have different values for large, medium, and small sizes.

Such a configuration may be possible in which the replacement factor calculation parameter 164 is configured to hold parameters for individual specifications other than sizes. The specifications other than sizes include weights, outputs, materials, shapes, and years of manufacture, for example.

Parameters combined so as to fit into actual values in the past or parameters obtained by regression calculation from actual values in the past are set to the replacement factor calculation parameter 164. The replacement factor calculation unit 161b acquires parameters corresponding to the specifications of a part for which a demand is predicted from the replacement factor calculation parameter 164 in order to calculate a replacement factor.

The demand information 165 holds the predicted result of a demand. FIG. 7 is a diagram of exemplary demand information 165. As illustrated in FIG. 7, the demand information 165 annually stores the number of demands calculated.

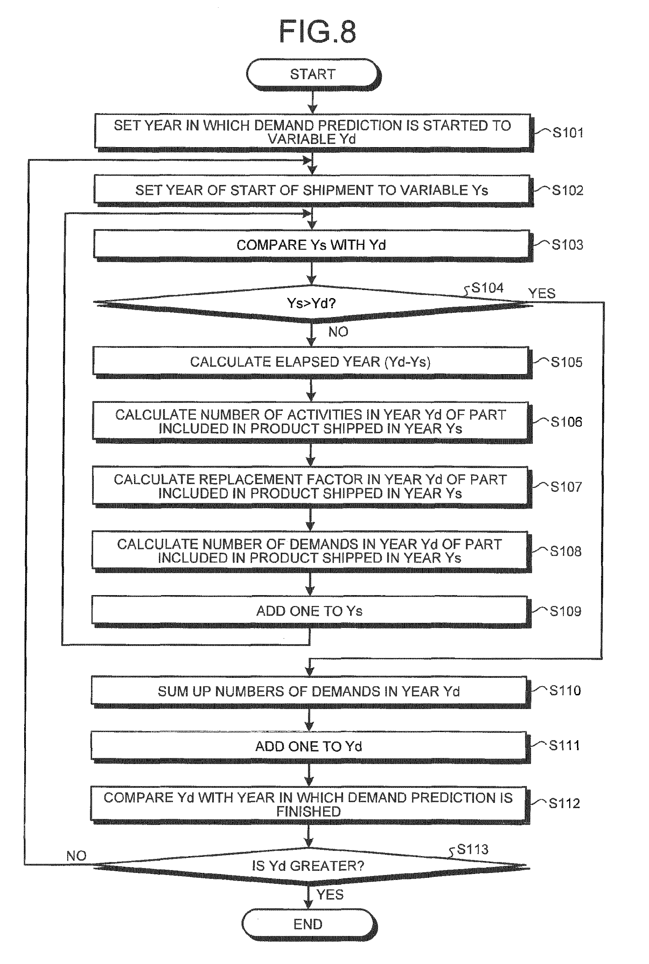

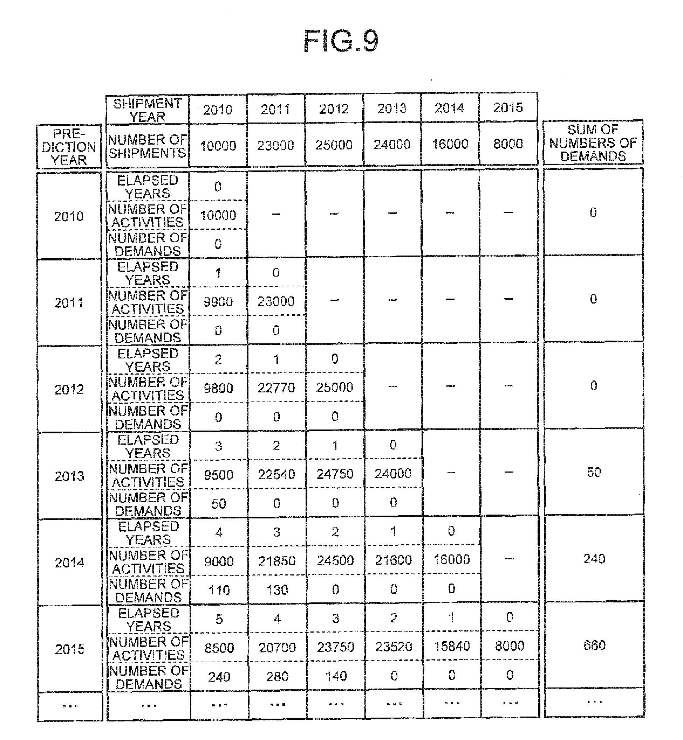

Next, the process procedures of a demand prediction process performed by the demand prediction apparatus 10 will be described with reference to FIGS. 8 and 9. FIG. 8 is a flowchart of the process procedures of a demand prediction process. FIG. 9 is a diagram of an exemplary calculated result of the demand prediction process. The process procedures illustrated in FIG. 8 are implemented by executing the demand prediction program 161 at the control unit 15. In executing the demand prediction program 161, information about a part for which a demand is predicted is acquired from the input unit 12, the communication unit 13, the media reading unit 14, or the storage unit 16.

As illustrated in FIG. 8, the control unit 15 sets a year in which demand prediction is started to a variable Yd (Step S101). For example, in the case where demands are predicted from the years 2010 to 2020, the control unit 15 sets the year 2010 to the variable Yd. The control unit 15 then sets the year of the start of shipment of a product including a part for which a demand is predicted to a variable Ys (Step S102). For example, in the case where a product is manufactured from the years 2010 to 2015, the control unit 15 sets the year 2010 to the variable Ys.

The control unit 15 then compares the value of the variable Ys with the value of the variable Yd (Step S103). In the case where the value of the variable Ys is smaller than the value of the variable Yd (No in Step S104), the control unit 15 calculates elapsed years from the year indicated by the variable Ys to the year indicated by the variable Yd (Step S105). Elapsed years are calculated by subtracting the value of the variable Ys from the value of the variable Yd.

Subsequently, the control unit 15 calculates the number of activities in the year indicated by the variable Yd of a part included in a product shipped in the year indicated by the variable Ys (Step S106). More specifically, the control unit 15 acquires the number of shipments corresponding to the year indicated by the variable Ys from the shipment number information 162, acquires the remaining rate corresponding to the elapsed years calculated in Step S105 from the remaining rate information 163, and multiplies the acquired number of shipments by the acquired remaining rate to calculate the number of activities.

Moreover, the control unit 15 calculates a replacement factor in the year indicated by the variable Yd of the part included in the product shipped in the year indicated by the variable Ys (Step S107). More specifically, the control unit 15 acquires parameters corresponding to the specifications of the part for which a demand is predicted from the replacement factor calculation parameter 164, and applies the acquired parameters and the elapsed years as a parameter expressing time to Equation (1) above to calculate the replacement factor.

The control unit 15 then calculates the number of demands in the year indicated by the variable Yd of the part included in the product shipped in the year indicated by the variable Ys (Step S108). More specifically, the control unit 15 calculates the number of demands by multiplying the calculated number of activities in Step S106 by the calculated replacement factor in Step S107. After that, the control unit 15 adds one to the value of the variable Ys (Step S109), and returns to Step S103.

The control unit 15 repeats the procedures from Step S103 to Step S109 until the value of the variable Ys exceeds the value of the variable Yd. The control unit 15 repeats the procedures from Step S103 to Step S109, and the control unit 15 annually calculates the number of demands in the year indicated by the variable Yd for the individual years in which the product is shipped. As a result, data for a row in the lateral direction in the example illustrated in FIG. 9 is calculated.

In the case where the value of the variable Ys is greater than the value of the variable Yd (Yes in Step S104), the control unit 15 sums up the numbers of demands in the year indicated by the variable Yd (sums up the numbers of demands in individual years in which the product is shipped) (Step S110). The sum of the numbers of demands is stored as the prediction value of a demand in the year indicated by the variable Yd on the demand information 165.

Subsequently, the control unit 15 adds one to the value of the variable Yd (Step S111). The control unit 15 then compares the value of the variable Yd with the year in which the demand prediction is finished (Step S112). In the case where the value of the variable Yd is smaller than the year in which the demand prediction is finished (No in Step S113), the control unit 15 returns to Step S102 in order to calculate the prediction value of a demand in the year indicated by the variable Yd. The control unit 15 repeatedly performs the processes from Step S102 to Step S111, and rows filled with data are increased in the example illustrated in FIG. 9. In the case where the value of the variable Yd is greater than the year in which the demand prediction is finished (Yes in Step S113), the control unit 15 ends the demand prediction process.

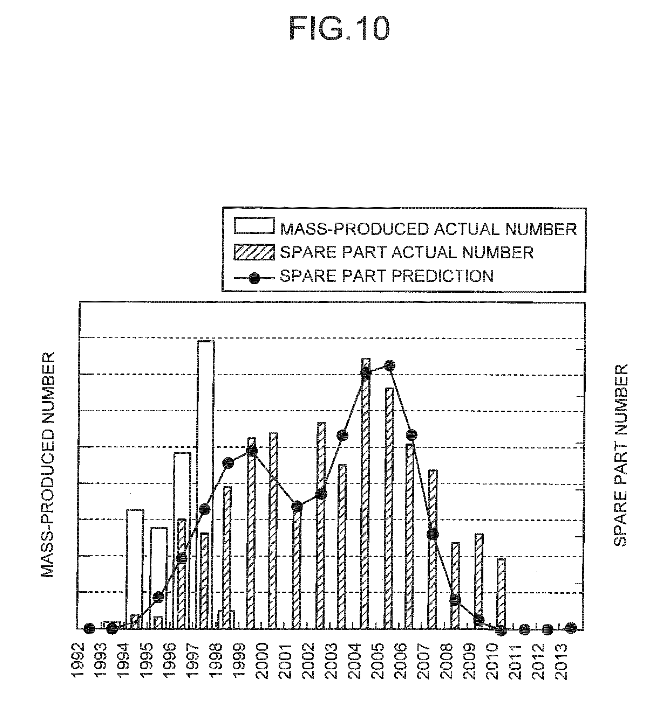

FIG. 10 is a diagram of an example that demands predicted using the demand prediction method according to the embodiment are compared with actual values. The spare part prediction illustrated in FIG. 10 is a prediction value of the number of sales of the turbocharger predicted using the demand prediction method according to the embodiment. The spare part actual number illustrated in FIG. 10 is an actual value of the number of sales of the turbocharger in the aftermarket. As illustrated in FIG. 10, the demand prediction method according to the embodiment is used, so that demands can be accurately predicted.

It is noted that the forms according to the present invention shown in the foregoing embodiment can be appropriately modified within the scope not deviating from the teachings of the present invention. For example, such a configuration may be possible in which the programs shown in the foregoing embodiment are split into a plurality of modules or integrated into other programs. Moreover, such a configuration may be possible in which the functions of the demand prediction apparatus 10 are appropriately distributed.

Furthermore, in the foregoing embodiment, an example is described where the demands for the turbocharger are predicted in the aftermarket. However, the present invention can be used for predicting a demand for a part or a consumable item of products other than the turbocharger in markets except in the aftermarket.

In addition, in the foregoing embodiment, an example is shown in which demands are annually predicted. However, units of periods to predict a demand are not limited to years. The present invention can be used for predicting a demand in quarters or monthly, for example.

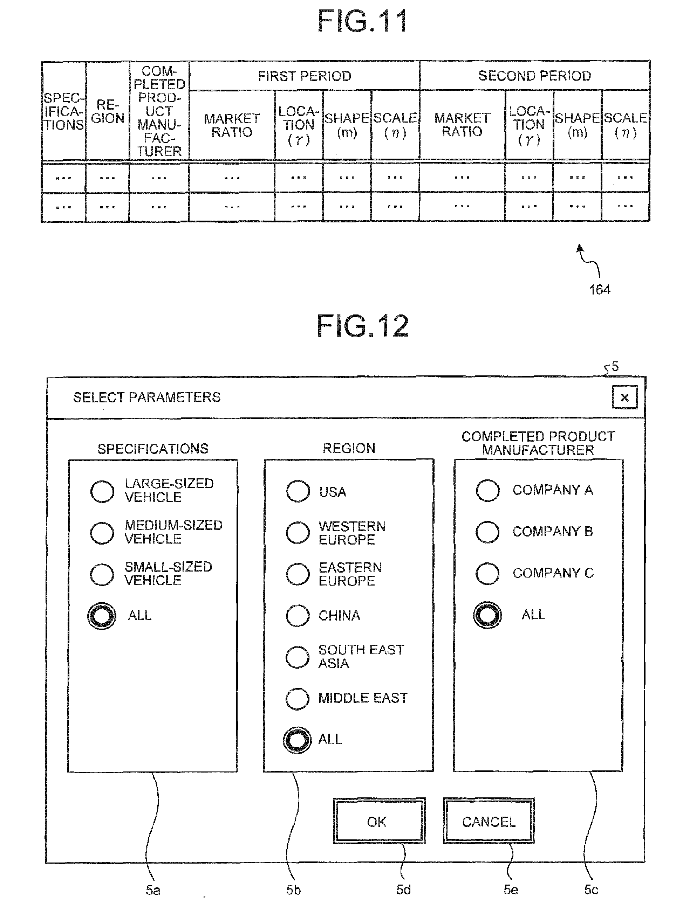

Moreover, in the foregoing embodiment, an example is shown in which the parameters for calculating the replacement factor are selected based on the specifications of a part. However, the conditions for selecting the parameters are not limited to the specifications. For example, as illustrated in FIG. 11, the replacement factor calculation parameter 164 may be configured in such a way that the parameters for calculating the replacement factor can be held in association with the specifications of a part, target regions in which a demand is predicted, and the combinations of manufacturers of a completed product (a product) including the part.

In this case, such a configuration may be possible in which when the demand prediction apparatus 10 performs the demand prediction process, the demand prediction apparatus 10 displays a parameter select screen 5 as illustrated in FIG. 12 on the display unit 11, and causes a user to select parameters. The parameter select screen 5 illustrated in FIG. 12 includes a selection region 5a that selects the specifications of a part, a selection region 5b that selects a region, a selection region 5c that selects a completed product manufacturer, a button 5d that confirms a selection, and a button 5e that cancels a selection.

On the parameter select screen 5 illustrated in FIG. 12, the item "all" is selected to choose a plurality of combinations of conditions for determining parameters. In the case where a plurality of combinations of conditions is selected, the demand prediction apparatus 10 calculates the replacement factor by applying the mean values of parameter values corresponding to the selected conditions to Equation (1) above, for example.

Moreover, such a configuration may be possible in which in order to further improve the prediction accuracy, the demand prediction result according to the present invention is corrected by combining the result with the actual values. For a method of correcting the demand prediction result, exponential smoothing can be used, for example. In the case of using exponential smoothing, the demand prediction result is corrected by Equation (2) below.

[Equation 2]

$$demand\ prediction\ value\ after\ corrected = $$
$$a \times actual\ number\ of\ shipments\ in\ the\ previous\ year + $$
$$(1 - a) \times demand\ prediction\ value\ this\ year$$
$$(2)$$

Reference Signs List

| | |
|---|---|
| 10 | Demand prediction apparatus |
| 11 | Display unit |
| 12 | Input unit |
| 13 | Communication unit |
| 14 | Media reading unit |
| 15 | Control unit |
| 16 | Storage unit |
| 151 | CPU |
| 152 | Memory |
| 161 | Demand prediction program |
| 161a | Activity number acquisition unit |
| 161b | Replacement factor calculation unit |
| 161c | Demand prediction unit |
| 162 | Shipment number information |
| 163 | Remaining rate information |
| 164 | Replacement factor calculation parameter |
| 165 | Demand information |

**Claims**

1. A demand prediction apparatus comprising:

   an activity number acquisition unit being configured to acquire a number of activities of a target for which a demand is predicted;
   a replacement factor calculation unit being configured to calculate a replacement factor of the target for which a demand is predicted based on a first curve that expresses a change of a probability of occurrence of a failure in a time series and a second curve that expresses a change of a probability of occurrence of a failure in a time series; and
   a demand prediction unit being configured to predict a demand for the target based on a number of activities acquired at the activity number acquisition unit and the replacement factor calculated at the replacement factor calculation unit.

2. The demand prediction apparatus according to claim 1, wherein the first curve is a curve based on a first Weibull distribution, and the second curve is a curve based on a second Weibull distribution.

3. The demand prediction apparatus according to claim 1, wherein the first Weibull distribution is different in at least a location parameter from the second Weibull distribution.

4. The demand prediction apparatus according to any one of claims 1 to 3, further comprising a storage unit configured to store a plurality of parameters to determine the first curve and the second curve,
   wherein the replacement factor calculation unit determines the first curve and the second curve based on a parameter selected from the parameters stored on the storage unit.

5. The demand prediction apparatus according to claim 4, wherein the storage unit stores the parameters for individual specifications of the target.

6. The demand prediction apparatus according to claim 4, wherein the storage unit stores the parameters for individual regions in which a demand is predicted.

7. The demand prediction apparatus according to any one of claims 1 to 6, wherein the replacement factor calculation unit varies a height of the first curve and a height of the second curve based on a temporal change in a ratio at which the target is used in a market.

8. A demand prediction method executed by a demand prediction apparatus, the method comprising the steps of:

acquiring a number of activities of a target that a demand is predicted;
calculating a replacement factor of the target that a demand is predicted based on a first curve that expresses a change of a probability of occurrence of a failure in a time series and a second curve that expresses a change of a probability of occurrence of a failure in a time series; and
calculating a demand for the target that a demand is predicted based on the number of activities and the replacement factor.

9. A demand prediction program that causes a demand prediction apparatus to perform the steps of:

acquiring a number of activities of a target that a demand is predicted;
calculating a replacement factor of the target that a demand is predicted based on a first curve that expresses a change of a probability of occurrence of a failure in a time series and a second curve that expresses a change of a probability of occurrence of a failure in a time series; and
calculating a demand for the target that a demand is predicted based on the number of activities and the replacement factor.

# FIG.1

DEMAND PREDICTION APPARATUS 10

CONTROL UNIT 15

DISPLAY UNIT 11

COMMU-NICATION UNIT 13

CPU 151

INPUT UNIT 12

MEMORY 152

MEDIA READING UNIT 14

STORAGE UNIT 16

DEMAND PREDICTION PROGRAM 161

SHIPMENT NUMBER INFORMATION 162

ACTIVITY NUMBER ACQUISITION UNIT 161a

REMAINING RATE INFORMATION 163

REPLACEMENT FACTOR CALCU-LATION UNIT 161b

REPLACEMENT FACTOR CALCULATION PARAMETER 164

DEMAND PREDICTION UNIT 161c

DEMAND INFORMATION 165

# FIG.2

REPLACEMENT FACTOR

3

TIME

# FIG.3

FIRST PERIOD

SECOND PERIOD

REPLACEMENT FACTOR

3

2

1

TIME

# FIG.4

| YEAR | NUMBER OF SHIPMENTS |
|------|---------------------|
| 2010 | 1000 |
| 2011 | 10000 |
| 2012 | 25000 |
| 2013 | 24000 |
| 2014 | 16000 |
| 2015 | 8000 |

162

# FIG.5

| YEAR | REMAINING RATE |
|------|----------------|
| 1 | 100% |
| 2 | 99% |
| 3 | 98% |
| 4 | 95% |
| 5 | 90% |
| 6 | 85% |
| 7 | 80% |
| 8 | 75% |
| ⋮ | ⋮ |

163

# FIG.6

| SIZE | FIRST PERIOD | | | | SECOND PERIOD | | | |
|---|---|---|---|---|---|---|---|---|
| | MARKET RATIO | LOCATION $(\gamma)$ | SHAPE $(m)$ | SCALE $(\eta)$ | MARKET RATIO | LOCATION $(\gamma)$ | SHAPE $(m)$ | SCALE $(\eta)$ |
| SMALL | a1 | x1 | M | H | a2 | x2 | M | H |
| MEDIUM | b1 | y1 | | | b2 | y2 | | |
| LARGE | c1 | z1 | | | c2 | z2 | | |

164

# FIG.7

| YEAR | NUMBER OF DEMANDS |
|---|---|
| 2010 | 0 |
| 2011 | 0 |
| 2012 | 0 |
| 2013 | 50 |
| 2014 | 240 |
| 2015 | 660 |
| ⋮ | ⋮ |

165

# FIG.8

```
                    ┌─────────────┐
                    │    START    │
                    └──────┬──────┘
                           │
   ┌───────────────────────▼────────────────────────┐
   │ SET YEAR IN WHICH DEMAND PREDICTION IS STARTED  │  S101
   │              TO VARIABLE Yd                     │
   └────────────────────────┬────────────────────────┘
                            │
   ┌────────────────────────▼────────────────────────┐
   │ SET YEAR OF START OF SHIPMENT TO VARIABLE Ys    │  S102
   └────────────────────────┬────────────────────────┘
                            │
   ┌────────────────────────▼────────────────────────┐
   │           COMPARE Ys WITH Yd                     │  S103
   └────────────────────────┬────────────────────────┘
                            │
                      ◇ Ys>Yd? ◇  S104  YES
                            │ NO
   ┌────────────────────────▼────────────────────────┐
   │        CALCULATE ELAPSED YEAR (Yd-Ys)           │  S105
   └────────────────────────┬────────────────────────┘
                            │
   ┌────────────────────────▼────────────────────────┐
   │ CALCULATE NUMBER OF ACTIVITIES IN YEAR Yd OF    │  S106
   │ PART INCLUDED IN PRODUCT SHIPPED IN YEAR Ys     │
   └────────────────────────┬────────────────────────┘
                            │
   ┌────────────────────────▼────────────────────────┐
   │ CALCULATE REPLACEMENT FACTOR IN YEAR Yd OF PART │  S107
   │    INCLUDED IN PRODUCT SHIPPED IN YEAR Ys       │
   └────────────────────────┬────────────────────────┘
                            │
   ┌────────────────────────▼────────────────────────┐
   │ CALCULATE NUMBER OF DEMANDS IN YEAR Yd OF PART  │  S108
   │    INCLUDED IN PRODUCT SHIPPED IN YEAR Ys       │
   └────────────────────────┬────────────────────────┘
                            │
   ┌────────────────────────▼────────────────────────┐
   │                ADD ONE TO Ys                     │  S109
   └────────────────────────┬────────────────────────┘

   ┌────────────────────────▼────────────────────────┐
   │      SUM UP NUMBERS OF DEMANDS IN YEAR Yd       │  S110
   └────────────────────────┬────────────────────────┘
                            │
   ┌────────────────────────▼────────────────────────┐
   │                ADD ONE TO Yd                     │  S111
   └────────────────────────┬────────────────────────┘
                            │
   ┌────────────────────────▼────────────────────────┐
   │ COMPARE Yd WITH YEAR IN WHICH DEMAND PREDICTION │  S112
   │              IS FINISHED                         │
   └────────────────────────┬────────────────────────┘
                            │
           NO         ◇ IS Yd GREATER? ◇  S113
                            │ YES
                    ┌───────▼───────┐
                    │     END       │
                    └───────────────┘
```

EP 2 763 096 A1

# FIG.9

| PRE-DICTION YEAR | SHIPMENT YEAR | 2010 | 2011 | 2012 | 2013 | 2014 | 2015 | SUM OF NUMBERS OF DEMANDS |
|---|---|---|---|---|---|---|---|---|
| | NUMBER OF SHIPMENTS | 10000 | 23000 | 25000 | 24000 | 16000 | 8000 | |
| 2010 | ELAPSED YEARS | 0 | | | | | | |
| | NUMBER OF ACTIVITIES | 10000 | — | — | — | — | — | 0 |
| | NUMBER OF DEMANDS | 0 | | | | | | |
| 2011 | ELAPSED YEARS | 1 | 0 | | | | | |
| | NUMBER OF ACTIVITIES | 9900 | 23000 | — | — | — | — | 0 |
| | NUMBER OF DEMANDS | 0 | 0 | | | | | |
| 2012 | ELAPSED YEARS | 2 | 1 | 0 | | | | |
| | NUMBER OF ACTIVITIES | 9800 | 22770 | 25000 | — | — | — | 0 |
| | NUMBER OF DEMANDS | 0 | 0 | 0 | | | | |
| 2013 | ELAPSED YEARS | 3 | 2 | 1 | 0 | | | |
| | NUMBER OF ACTIVITIES | 9500 | 22540 | 24750 | 24000 | — | — | 50 |
| | NUMBER OF DEMANDS | 50 | 0 | 0 | 0 | | | |
| 2014 | ELAPSED YEARS | 4 | 3 | 2 | 1 | 0 | | |
| | NUMBER OF ACTIVITIES | 9000 | 21850 | 24500 | 21600 | 16000 | — | 240 |
| | NUMBER OF DEMANDS | 110 | 130 | 0 | 0 | 0 | | |
| 2015 | ELAPSED YEARS | 5 | 4 | 3 | 2 | 1 | 0 | |
| | NUMBER OF ACTIVITIES | 8500 | 20700 | 23750 | 23520 | 15840 | 8000 | 660 |
| | NUMBER OF DEMANDS | 240 | 280 | 140 | 0 | 0 | 0 | |
| ... | ... | ... | ... | ... | ... | ... | ... | ... |

# FIG.10

# FIG.11

| SPEC-IFICA-TIONS | RE-GION | COM-PLETED PROD-UCT MANU-FAC-TURER | FIRST PERIOD | | | | SECOND PERIOD | | | |
|---|---|---|---|---|---|---|---|---|---|---|
| | | | MARKET RATIO | LOCA-TION $(\gamma)$ | SHAPE $(m)$ | SCALE $(\eta)$ | MARKET RATIO | LOCA-TION $(\gamma)$ | SHAPE $(m)$ | SCALE $(\eta)$ |
| ... | ... | ... | ... | ... | ... | ... | ... | ... | ... | ... |
| ... | ... | ... | ... | ... | ... | ... | ... | ... | ... | ... |

164

# FIG.12

5

SELECT PARAMETERS ☒

SPECIFICATIONS

○ LARGE-SIZED VEHICLE

○ MEDIUM-SIZED VEHICLE

○ SMALL-SIZED VEHICLE

◉ ALL

REGION

○ USA

○ WESTERN EUROPE

○ EASTERN EUROPE

○ CHINA

○ SOUTH EAST ASIA

○ MIDDLE EAST

◉ ALL

COMPLETED PRODUCT MANUFACTURER

○ COMPANY A

○ COMPANY B

○ COMPANY C

◉ ALL

OK          CANCEL

5a          5b          5d          5e          5c

16

## INTERNATIONAL SEARCH REPORT

| International application No. |
|---|
| PCT/JP2012/074399 |

### A. CLASSIFICATION OF SUBJECT MATTER

*G06Q30/02*(2012.01)i, *G06Q10/04*(2012.01)i, *G06Q50/10*(2012.01)i

According to International Patent Classification (IPC) or to both national classification and IPC

### B. FIELDS SEARCHED

Minimum documentation searched (classification system followed by classification symbols)
G06Q30/02, G06Q10/04, G06Q50/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2011-232950 A (Hitachi East Japan Solutions, Ltd.), 17 November 2011 (17.11.2011), entire text; all drawings (Family: none) | 1-9 |
| X | JP 2004-234470 A (Ricoh Co., Ltd.), 19 August 2004 (19.08.2004), entire text; all drawings (Family: none) | 1-9 |
| A | JP 2003-331087 A (Honda Motor Co., Ltd.), 21 November 2003 (21.11.2003), entire text; all drawings & WO 2003/096244 A1 & EP 1363211 A2 & BR 210947 A & CN 1520571 A | 1-9 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 November, 2012 (29.11.12) | 11 December, 2012 (11.12.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2012/074399 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2007-141036 A  (Ricoh Co., Ltd.), 07 June 2007 (07.06.2007), entire text; all drawings & US 2007/0118421 A1 | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003233709 A